# EUROPÄISCHE PATENTSCHRIFT

(11) **EP 1 277 649 B1**
(45) Veröffentlichungstag und Bekanntmachung des Hinweises auf die Patenterteilung: **25.06.2008**
(21) Anmeldenummer: 02014742.7
(22) Anmeldetag: 04.07.2002
(51) Int. Cl.: B62M 11/16

(54) **Lastschaltbare Mehrgangnabe**
Multi-speed hub transmission
Transmission pour moyeu à plusieurs vitesses

(30) Priorität: 17.07.2001 DE 10134842
(43) Veröffentlichungstag der Anmeldung: 22.01.2003
(73) Patentinhaber: SRAM Deutschland GmbH, 97404 Schweinfurt (DE)
(72) Erfinder: Butz, Hans, 97525 Schwebheim (DE)

(56) Entgegenhaltungen:
- EP-A- 1 060 980
- DE-A- 2 937 126
- DE-A- 3 443 592
- DE-A- 3 732 977
- GB-A- 2 128 273
- US-A- 5 443 279
- US-A- 5 971 884

## Beschreibung

Die vorliegende Erfindung betrifft eine lastschaltbare Getriebenabe gemäß dem Oberbegriff des Hauptanspruchs.

Lastschaltbare Getriebe verfügen über Einrichtungen, die es ermöglichen, Getriebeelemente, die gerade im Kraftfluß stehen, mit geringer Schaltkraft auszusteuern und andere Getriebeelemente einzusteuem. Dieses Aus- und Einsteuern von Getriebeelementen, wie Hohlrad, Planetenradträger, Antreiber und Kupplungskomponente erfolgt vorzugsweise über steuerbare, angefederte Klinken.

Eine solche Klinkensteuerung wird bereits in der DE 2937126 C2 anhand einer Zweigangnabe beschrieben. Hierbei wird mit einem, in Achsrichtung angeordneten und zwischen zwei Endlagen, mittels einer Schaltstange verschiebbaren Schaltelement ein vorgespanntes Klinkensteuerglied mit relativ geringer Schaltkraft gegen angefederte Klinken verschoben. Das Klinkensteuerglied untergreift die Klinken und schwenkt sie, auch unter Last, aus der entsprechenden Klinkenverzahnung heraus und unterbricht damit den Kraftfluß.

Eine klinkengeteuerte, lastschaltbare Mehrgang-Schaltnabe mit einem Ritzel tragenden Antreiber, der auf einer starren Nabenachse gelagert ist, und einem Planetenrad-Getriebesatz, wird in der DE 3443592 C2 beschrieben. Diese Schaltnabe weist ein Planetenradgetriebe mit feststehendem Sonnenrad, Planetenradträger mit Planetenrädern sowie ein Hohlrad und vier Klinkenfreiläufe auf. Jeweils ein Klinkenfreilauf liegt im Kraftfluß zwischen Antreiber und Hohlrad, zwischen Schaltteil und Planetenradträger, zwischen Hohlrad und Nabenhülse sowie zwischen einem drehfest mit dem Planetenradträger verbundenen Klinkenträger und der Nabenhülse. Grundsätzlich können die Klinken in die entsprechenden Klinkenzähne ein- bzw. ausgesteuert oder überholt werden, wenn das Bauteil mit den Klinkenzähnen schneller dreht als das Bauteil mit den Klinken. In der DE 2937126 C2 sind alle Merkmale aus dem Oberbegriff von Anspruch 1 verwirklicht.

Mit einem Schaltgestänge wird über ein axial verschiebbares Betätigungsteil das Schaltteil in die gewünschte Gangstellung geschoben und damit der Kraftfluß über die entsprechenden Klinken geleitet. So wird z. B. im Schnellgang die vom Ritzel in den Antreiber eingeleitete Kraft an das Schaltteil weitergegeben und über die Schaltteilklinken zum Planetenradträger geleitet. Die Planetenräderdrehen das Hohlrad und die HohlradKlinken übertragen die Kraft zur Nabenhülse und damit zum Antriebsrad. In dieser Schaltsituation stehen alle Klinken den entsprechenden Klinkenzähnen gegenüber, wobei die Antreiber-Klinken und die Klinken am drehfest mit dem Planetenradträger gekoppelten Klinkenträger von ihren Klinkenzähnen überholt werden.

Zum Schalten des Direkt-und des Bergganges wird das Betätigungsteil mit seiner entsprechend gestalteten Anlauffläche gegen das Schaltteil geschoben. Die Drehung des Schaltteils wird genutzt, um die SchaltteilKlinken aus dem Eingriff am Planetenradträger zu lösen, wodurch die erforderliche Schaltkraft deutlich reduziert wird. Der Kraftfluß über das Schaltteil ist somit unterbrochen und läuft beim Direktgang vom Antreiber über die Antreiber-Klinke zum Hohlrad und über die Hohlrad-Klinke zur Nabenhülse. Die Klinken am drehfest mit dem Planetenradträger gekoppelten Klinkenträger werden dabei von ihren Klinkenzähnen überholt. Beim Berggang wird zusätzlich die Hohlrad-Klinke von einer Anlauffläche am Schaltteil ausgesteuert, somit läuft der Kraftfluß vom Hohlrad über die Planetenräder zum Planetenradträger und von dort über den Klinkenträger und die Klinken zur Nabenhülse.

Diese über ein gutes Lastschaltprinzip verfügende Mehrgangnabe zeigt jedoch einen grundsätzlichen Mangel.

Komplexe Bauteilgestaltung von Antreiber, Hohlrad und Schaltteil erschweren Fertigung und Montage.

Der Erfindung liegt nun die Aufgabe zugrunde, eine gattungsgemäße lastschaltbare Mehrgangnabe zu entwickeln, die fertigungs- sowie montagefreundlich aufgebaut ist.

Im einzelnen soll zwischen den angefederten Schaltkomponenten und der entsprechenden Federabstützung keine Drehzahldifferenz auftreten. In ungünstigen Schaltsituationen soll eine Gangvorwahl bzw. Zwischenspeicherung der Schaltkraft möglich sein. Der Umschaltvorgang vom Antrieb in den Rücktritt-Bremsbetrieb soll möglichst ohne Verzögerung aber mit einem gewünschten Totgang und der Bremsvorgang stets in der Berggang-Übersetzung erfolgen. Die Gestaltung der Bauteile soll die Fertigung von werkzeugfallenden Teilen z. B. Sinter- oder Kunststoffformteilen ermöglichen, die möglichst ohne Nachbearbeitung hergestellt werden und einfach zu montieren sind.

Eine Lösungsmöglichkeit ist im Kennzeichen des Hauptanspruches angegeben. Weitere Ausgestaltungen sind den Unteransprüchen zu entnehmen. Wesentliches Merkmal der erfindungsgemäßen lastschaftbaren Mehrgangnabe ist zum einen die Anordnung eines separaten Klinkenträgers, der nach außen und nach innen gerichtete Klinken aufnimmt und axial neben dem Antreiber angeordnet ist, und zum anderen ein geteiltes Hohlrad zur Aufnahme und Lagerung von Verschiebeklinken.

Der separate Klinkenträger sitzt auf Mitnahmesegmenten des Antreibers und trägt am Umfang Klinken, die in das Hohlrad eingreifen, jeweils in die eine bzw. andere Verdrehrichtung ausgerichtet sind, und von einem mit dem Antreiber drehfest verbundenem Steuerteil aktiviert oder deaktiviert werden. Das Steuerteil wird spielfrei von den Mitnahmesegmenten des Antreibers um die Nabenachse gedreht, während der Klinkenträger gegenüber den Mitnahmesegmenten mit einem Verdrehspiel ausgestattet ist, so dass die entsprechenden federvorgespannten Klinken am Umfang des Klinkenträgers drehrichtungsabhängig vom Steuerteil gleichzeitig ein- bzw. ausgesteuert werden. Hierzu sind im Steuerteil mehrere Freiräume mit geeigneten Steuerprofilen vorgesehen, die die Klinken teilweise axial umschließen und bei einer relativen Verdrehung von Antreiber und Klinkenträger die radiale Bewegung der federvorgespannten Klinken bewirken.

Am Innendurchmesser des Klinkenträgers sind ebenfalls federvorgespannte Klinken vorgesehen, die in das Kupplungsstück eingreifen und länger sind als die Mitnahmekontur es Kupplungsstückes. Die Klinken werden über eine Steuerkontur an der axial verschiebbaren und mit der Nabenachse drehfest verbundenen Schalthülse einoder ausgesteuert.

Beim Schaltvorgang wird die Schaltbewegung des Schaltelementes über eine Distanzbuchse auf die mittels einer Feder axial vorgespannten Schalthülse übertragen. Die Distanzbuchse ist länger als die Innenlänge des federvorgespannten Kupplungsstückes. Hierdurch wird gewährleistet, dass bei jedem Schaltvorgang eine Feder vorgespannt wird, die eine Gangumschaltung erst ausführt, wenn sich gerade eine günstige Schaltsituation ergibt. Verschiebt sich das Schaltelement in Richtung Planetenrad, so wird bereits eine gleichgerichtete Verschiebung der vorgespannten Schalthülse ermöglicht, während die nach innen gerichteten Klinken am Klinkenträger noch in die Mitnahmekontur des Kupplungsstückes eingreifen. Die vorgespannte Schalthülse verfügt über einen Anlaufbund, eine Steuerkontur und einen Auflaufbund, der die Klinken im ausgesteuerten Zustand hält. Der Anlaufbunddurchmesser entspricht in etwa dem Fußkreisdurchmesser der Mitnahmekontur des Kupplungsstückes, er dient zum Vorzentrieren der nach innen gerichteten Klinken am Klinkenträger. Diese Klinken reichen weit über die Mitnahmezähne des Kupplungsstückes hinaus und können aufgrund von ungleichmäßiger Belastung oder ungünstiger Toleranzsituation leicht schräg stehen, was durch eine Vorzentrierung auf einfache Weise ausgeglichen werden kann. Erst dann greift die Steuerkontur unter die Klinken und steuert diese aus der Mitnahmekontur am Kupplungsstück heraus. Die längeren Klinken ermöglichen ein leichtes Zentrieren und Untergreifen durch die Schalthülse. Anschließend wird das lastfreie Kupplungsstück von der Schalthülse in Richtung Planetenrad verschoben.

Das Kupplungsstück ist in allen Schaltstellungen drehfest mit dem Planetenradträger verbunden und kann bei eingesteuerten Klinken die Kraft vom Antreiber auf den Planetenradträger übertragen. Durch eine axiale Verschiebung des Kupplungsstückes können die als Verschiebeklinken ausgebildeten Klinken im Hohlrad über eine Anlauffläche aus der Mitnahmekontur der Nabenhülse heraus gesteuert werden. Die Verschiebeklinken sind mittels Bolzen in Langlöchern am Hohlrad gelagert und werden von Formfedern vorgespannt. Das Hohlrad wird zweiteilig ausgeführt, wobei die gegenüberliegenden Flächen aufeinander abgestimmt sind, um eine radiale und drehfeste Verbindung zu gewährleisten und um die Montage der bolzengelagerten Verschiebeklinken zu erleichtern und die Herstellung des Hohlrades als Formteil z. B. Sinterformteil oder Kaltumformteil zu ermöglichen. Federvorgespannte Verschiebeklinken zur Kopplung von Hohlrad und Nabenhülse werden eingesetzt, um einer Getriebeverspannung nach einem Rücktrittbremsvorgang entgegenzuwirken, die entstehen könnte, wenn nicht verschiebbare Hohlradklinken und Sperrklinken, die im Kraftfluß zwischen Planetenradträger und Nabenhülse liegen, gleichzeitig in Mitnahmekonturen der Nabenhülse eingreifen.

Der Aufbau und die Anordnung des separaten Klinkenträgers, der Steuerhülse, des Kupplungsstückes, des Hohlrades und des Steuerteils, erlauben eine kostengünstige nachbearbeitungsfreie Herstellung dieser Komponenten als Formteil z. B. als Sinterformteil, Schmiedeteil, Kaltumformteil oder als Kunststoffformteil sowie eine einfache Montage der Baugruppen bzw. der Getriebenabe.

Die Gangwahl dieser lastschaltbaren Mehrgangnabe erfolgt ausschließlich über ein- bzw. ausgesteuerte Klinken.

Beim Berggang läuft der Kraftfluß vom Antreiber über Mitnahmesegmente zum Klinkenträger, über Antriebsklinken am Umfang zum Hohlrad, über Planetenräder zum Planetenradträger und von dort über Klinken zur Nabenhülse. In dieser Schaltstellung sind die Klinken vom Klinkenträger zum Kupplungsstück und vom Hohlrad zur Nabenhülse ausgesteuert.

Beim direkten Gang läuft der Kraftfluß vom Antreiber über Mitnahmesegmente zum Klinkenträger, über Antriebsklinken zum Hohlrad und von dort über Klinken zur Nabenhülse. In dieser Schaltstellung sind die Klinken zum Kupplungsstück ausgesteuert und die Klinken vom Planetenradträger zur Nabenhülse werden von der entsprechenden Mitnahmekontur überholt.

Im Schnellgang läuft der Kraftfluß vom Antreiber über Mitnahmesegmente zum Klinkenträger, über Klinken am Innendurchmesser des Klinkenträgers zum Kupplungsstück, von dort zum Planetenradträger und mittels der Planetenräder zum Hohlrad. Die Verschiebeklinken im Hohlrad leiten den Kraftfluß in die Nabenhülse ein. In dieser Schaltstellung werden die Klinken vom Planetenradträger zur Nabenhülse und die Klinken vom Klinkenträger zum Hohlrad überholt.

Die Rücktrittbremse der Mehrgangnabe wirkt stets in der Berggangübersetzung. Durch Rückwärtsdrehen des Antreibers werden beim Durchlaufen des Verdrehspieles zwischen Mitnahmesegment und Klinkenträger, gleichzeitig die Antriebsklinken vom Steuerteil ausgesteuert und die Bremsklinken eingesteuert. Die Rückdrehbewegung wird von den Bremsklinken auf das Hohlrad übertragen und über die Planetenräder an den Planetenradträger weitergeleitet. Anschließend wird die Bremsbewegung in eine axiale Bewegung des Bremskonuses oder bei anderen Bremsvorrichtungen z. B. in eine radiale Bewegung mittels Steigfelder und Rollen umgeformt. Die an der Nabenhülse und am Kupplungsstück angreifenden Klinken werden beim Bremsvorgang von den entsprechenden Mitnahmekonturen überholt.

### Kurzbeschreibung der Zeichnungen

Anhand von vier Figuren werden Ausführungsbeispiele zur weiteren Erläuterung der Erfindungsmerkmale gezeigt:
- Fig. 1: zeigt den Halbschnitt durch ein Nabengetriebe mit separatem Klinkenträger
- Fig. 2: zeigt eine Explosionszeichnung mit den wesentlichen Getriebebauteilen
- Fig. 3: zeigt eine Explosionszeichnung vom Hohlrad mit angefederten bolzengelagerten Verschiebeklinken
- Fig. 4: zeigt den Kraftfluß in den verschiedenen Gangstufen

### Beschreibung eines bevorzugten Ausführungsbeispiels

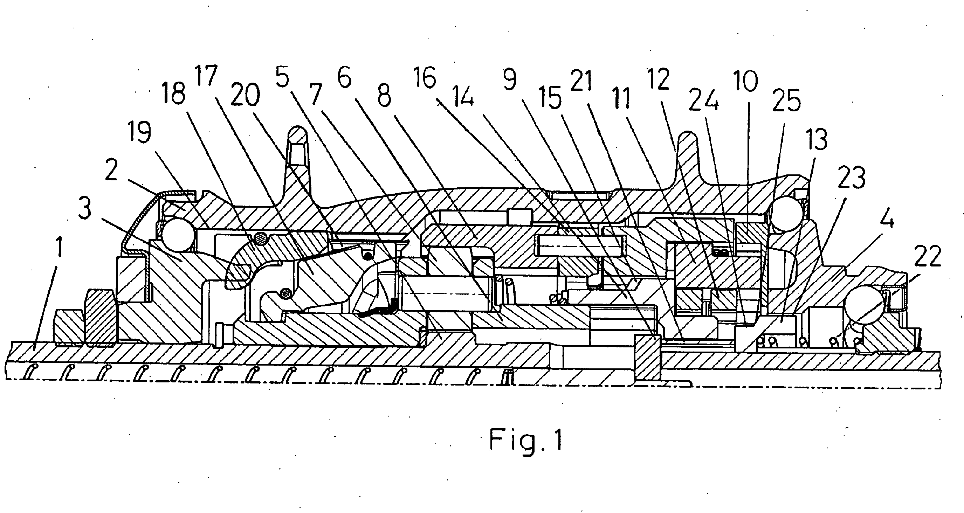

Fig. 1 zeigt einen Halbschnitt durch ein lastschaltbares Nabengetriebe mit separatem Klinkenträger. Diese Schaltnabe verfügt über einen Berggang mit einer Untersetzung, einem direkten Gang mit gleicher Antreiber- und Nabenhülsendrehzahl und einem Schnellgang mit einer entsprechenden Übersetzung. Als zentrales Bauteil wird die Nabenachse 1 beidseitig am Fahrradrahmen befestigt. Die Nabenhülse 2 stützt sich mittels Wälzlager auf einem festen Lagerschild 3 und dem ebenfalls gelagerten Antreiber 4 ab. Zwischen Antreiber 4 und Nabenhülse 2 befindet sich ein Planetenradgetriebe bestehend aus einem achsfesten Sonnenrad 5, einem Planetenradträger 6, Planetenrädern 7 und einem Hohlrad 8. Die verschiedenen Gangstufen werden mittels ein- und aussteuerbarer Klinken von einem federgekoppelten Schaltelement 9 durch die hohle Nabenachse 1 geschaltet. Der von einem Kettenrad angetriebene Antreiber 4 verfügt über zwei Mitnahmesegmente, die zum einen das Steuerteil 10 drehfest aufnehmen und zum anderen den Klinkenträger 11 über ein Verdrehspiel mitnehmen und tragen. Am Klinkenträger 11 sind am Umfang angefederte Antriebsklinken und Bremsklinken angeordnet, die jeweils vom Steuerteil 10 in die Mitnahmekontur am Hohlrad 8 gesteuert werden. Am Innendurchmesser des Klinkenträgers 11 sind angefederte Übertragungsklinken 12 angebracht, die von der federvorgespannten Schalthülse 13 in die Mitnahmekontur am Kupplungsstück 14 ein- bzw. ausgesteuert wird. Das federvorgespannte Kupplungsstück 14 ist axial verschiebbar aber stets drehfest mit dem Planetenradträger 6 verbunden und überträgt im eingesteuerten Zustand die Kraft zum Planetenradträger. Es verfügt über eine Anlaufkontur 15, um die Hohlradklinken 16 aus der entsprechenden Mitnahmekontur an der Nabenhülse 2 auszusteuern. Der Planetenradträger 6 verfügt auf der Lagerschildseite über ein Schraubengewinde, das beim Rücktrittbremsvorgang eine axiale Verschiebung des Bremskonuses 17 ermöglicht, wodurch der Bremsmantel 18 in Zusammenwirkung mit einem weiteren Konus am Lagerschild 3 gegen die Bremszylinder 19 gedrückt wird. Der Bremskonus 17 trägt am Umfang angefederte Sperrklinken 20, die stets in die entsprechende Mitnahmekontur an der Nabenhülse eingreifen bzw. von der Mitnahmekontur überholt werden.

Zum Einlegen des Bergganges wird das Schaltelement 9 in Richtung Sonnenrad 5 verschoben. Dies kann erst erfolgen, wenn die Kraft der am Schaltelement 9 anliegenden Federkopplung geringer ist, als die Vorspannkraft an der Schalthülse 13. Die Schalthülse 13 verschiebt das Kupplungsstück 14 sowie die Distanzbuchse 21 und damit das Schaltelement 9 in Richtung Sonnenrad 5. Die Anlaufkontur 15 am Kupplungsstück 14 fährt unter die Hohlradklinken 16 und steuert sie aus der Mitnahmekontur an der Nabenhülse 2. Der Kraftfluß läuft vom Antreiber 4 über die Antriebsklinken des Klinkenträgers 11 zum Hohlrad 8, über die Planetenräder 7 zum Planetenradträger 6, von dort zum Bremskonus 17 und über die Sperrklinken 20 schließlich zur Nabenhülse 2. Sollte für den Schaltvorgang seitens des Getriebes keine Schaltbereitschaft vorliegen, so wird die Schaltarbeit kurzzeitig in der Schalthülsenfeder 22 zwischengespeichert, bis sich wieder eine günstige Schaltsituation einstellt.

Zum Einlegen des direkten Ganges wird das Schaltelement 9 in Richtung Antreiber 4 geschoben, dabei verschiebt die Distanzbuchse 21 die Schalthülse 13 gegen die anstehende Federkraft. Das federvorgespannte Kupplungsstück 14 folgt der zurückweichenden Schalthülse 13 und gibt dabei den Hohlradklinken 16 die Möglichkeit, in die Mitnahmekontur an der Nabenhülse 2 einzuschwenken. Der Kraftfluß verläuft vom Antreiber 4 über die Antriebsklinken des Klinkenträgers 11 zum Hohlrad 8 und über die Hohlradklinken 16 zur Nabenhülse 2, dabei werden die Sperrklinken 20 von der entsprechenden Mitnahmekontur an der Nabenhülse 2 überholt. Sollte für den Schaltvorgang seitens des Getriebes keine Schaltbereitschaft vorliegen, so wird die Schaltarbeit kurzzeitig in der Feder vor dem Schaltelement zwischengespeichert, bis sich wieder eine günstige Schaltsituation einstellt.

Wird nun der Schnellgang eingelegt, so wird das Schaltelement 9 weiter in Richtung Antreiber 4 geschoben, dabei verschiebt die Distanzbuchse 21 die Schalthülse 13 gegen die anstehende Federkraft. Die vom Auflaufbund 23 ausgesteuerten Übertragungsklinken 12 werden freigegeben und schwenken in die Mitnahmekontur am Kupplungsstück 14 ein. Der Kraftfluß verläuft vom Antreiber 4 über die Übertragungsklinken 12 des Klinkenträgers 11 zum Kupplungsstück 14, von dort über den Planetenradträger 6 und die Planetenräder 7 zum Hohlrad 8, wo er von den Hohlradklinken 16 in die Nabenhülse 2 eingeleitet wird. In dieser Schaltstellung werden die Sperrklinken 20 von der entsprechenden Mitnahmekontur an der Nabenhülse 2 überholt. Sollte für den Schaltvorgang seitens des Getriebes keine Schaltbereitschaft vorliegen, so wird die Schaltarbeit kurzzeitig in der Feder vor dem Schaltelement zwischengespeichert, bis sich wieder eine günstige Schaltsituation einstellt.

Wird vom Schnellgang in den direkten Gang zurückgeschaltet, so wird die Spannung der Feder vor dem Schaltelement 9 zurückgenommen. Die vorgespannte Schalthülsenfeder 22 wirkt auf die Schalthülse 13 und verschiebt diese und das Kupplungsstück 14 sowie die Distanzbuchse 21 und damit das Schaltelement 9 in Richtung Sonnenrad 5. Dabei fährt die Schalthülse 13 mit ihrem Anlaufbund 24 unter die Übertragungsklinken 12 und bewirkt bei nicht exakt liegenden Klinken eine Vorzentrierung der Übertragungsklinken 12, bevor sie von der Steuerkontur 25 ausgesteuert und vom Auflaufbund 23 im ausgesteuerten Zustand gehalten werden. Sollte für den Schaltvorgang in den direkten Gang seitens des Getriebes keine Schaltbereitschaft vorliegen, so wird die Schaltarbeit kurzzeitig in der Schalthülsenfeder zwischengespeichert, bis sich wieder eine günstige Schaltsituation einstellt.

Der Rücktrittbremsvorgang erfolgt stets über die Berggangübersetzung und wird durch eine Rückdrehbewegung am Antreiber eingeleitet. Hierbei verdreht sich der Antreiber 4 gegenüber dem Klinkenträger 11. Zur Aufnahme der Mitnahmesegmente des Antreibers 4 sind am Klinkenträger 11 entsprechende Aussparungen vorgesehen, um das erforderliche Verdrehspiel für das Ein- bzw. Aussteuern der Antriebs- bzw. Bremsklinken durch das Steuerteil 10 zu ermöglichen. Beim Rückwärtsdrehen des Antreibers 4 wird das drehfest auf dem Antreiber sitzende Steuerteil 10 gegenüber dem Klinkenträger 11 verdreht, dabei werden die Antriebsklinken und die Bremsklinken von entsprechenden Steuerprofilen im Steuerteil 10, das die Klinken teilweise umschließt, gleichzeitig umgesteuert. Die Bremsklinken greifen in die beidseitig wirkende Mitnahmekontur am Hohlrad 8 ein. Von dort wird die Rückwärtsbewegung auf die Planetenräder 7 und damit auf den Planetenradträger 6 übertragen. Durch die Rückwärtsdrehung des Planetenradträgers 6 wird der Bremskonus 17 von einem Schraubengewinde am Planetenradträger 6 axial in Richtung Lagerschild 3 bewegt, dabei wird der Bremsmantel 18, der sich auf einer Schräge am Bremskonus 17 und am Lagerschild 3 abstützt, gegen den Bremszylinder 19 gepreßt. Während des Bremsvorganges sind die in die Mitnahmekontur an der Nabenhülse und am Kupplungsstück eingreifenden Klinken ausgesteuert oder werden von den entsprechenden Mitnahmekonturen überholt.

Dieses Getriebekonzept zeichnet sich gegenüber herkömmlichen Varianten noch durch verminderte interne Reibung aus. Wie in dieser Figur gezeigt, werden z. B. die für die Schaltfunktion erforderlichen axial wirkenden Federn und angefederten Bauteile nicht an benachbarten, mit Relativdrehzahlen drehenden Komponenten abgestützt. Insbesondere das federvorgespannte Schaltelement 9, die Distanzbuchse 21, die Schalthülse 13 und die Schalthülsenfeder 22 sind drehfest und verursachen keine axialen Reibungsverluste. Die zwischen Planetenradträger 6 und Kupplungsstück 14 wirkende Verschiebefeder verursacht ebenfalls keine axialen Reibungsverluste, da diese Komponenten stets drehfest miteinander verbunden sind.

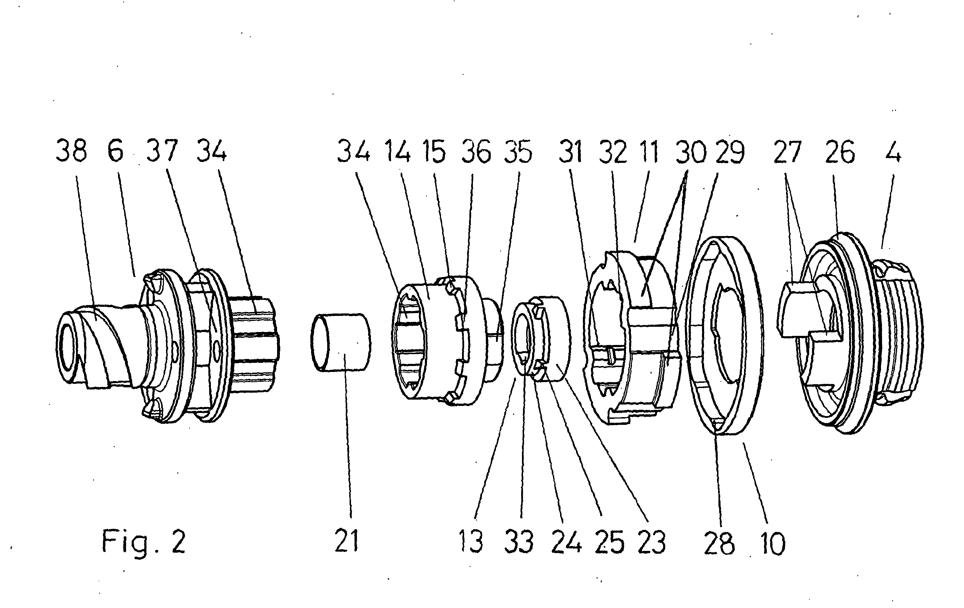

Fig. 2 zeigt eine Explosionszeichnung mit den wesentlichen, direkt um die Nabenachse angeordneten Getriebebauteilen. Der Antreiber 4 nimmt auf der einen Seite das Zahnrad auf und hat eine Laufbahn 26 für die Wälzkörper. Auf der anderen Seite befinden sich die Mitnahmesegmente 27, die in entsprechende Konturen am Steuerteil 10 eingreifen und verdrehfest aufnehmen.

Das Steuerteil 10 ist ein Kunststoffformteil und verfügt über Steuerprofile 28, die zum einen die Antriebsklinken und zum anderen die Bremsklinken teilweise umschließen und bei einer Relativbewegung von Antreiber 4 und Klinkenträger 11 die Klinken je nach Drehrichtung gleichzeitig ein- bzw. aussteuern.

Der Klinkenträger 11 ist als Sinterformteil ausgebildet, das ohne spanende Bearbeitung montiert werden kann. Am Umfang sind Klinkenaufnahmen 29 für die entgegengesetzt ausgerichteten Antriebs- und Bremsklinken vorgesehen. Diese Klinken werden von einer Schraubenfeder vorgespannt, die alternativ zu einem rundum verlaufenden Einstich von versetzten Führungselementen 30 axial abgestützt wird. Am Innendurchmesser des Klinkenträgers 11 sind in verschiedenen Umfangsabschnitten zum einen Aussparungen mit den Verdrehanschlägen 31 zur Aufnahme der Mitnahmesegmente 27 und zum anderen Aufnahmemulden 32 für die in Richtung Kupplungsstück 14 wirkenden Übertragungsklinken vorgesehen. Die Übertragungsklinken werden von einem Sprengring angefedert und axial fixiert, da sich der Sprengring an entsprechenden, hier nicht dargestellten Führungskanten abstützen kann.

Die Schalthülse 13 ist ein Sinterformteil und wird auf der Nabenachse mittels einer Längsführung 33 drehfest geführt. Der Anlaufbund 24 übernimmt eine eventuell erforderliche Vorzentrierung der Übertragungsklinken, bevor sie von einer nockenförmigen Steuerkontur 25 ausgesteuert werden und dann in dieser Stellung vom Anlaufbund 23 gehalten werden. Die Schalthülse 13 wird von der Schalthülsenfeder in Richtung Planetenradträger 6 vorgespannt und über die Distanzbuchse 21 vom Schaltelement axial verschoben.

Das Kupplungsstück 14 ist ebenfalls als Sinterformteil gestaltet und ist stets über eine Kupplungsverzahnung 34 mit dem Planetenradträger 6 drehfest verbunden. Die Übertragungsklinken liegen im eingesteuerten Zustand an den Mitnahmezähnen 35 an. Am Umfang ist analog zur Schalthülse eine Anlaufkontur 15 am Aussteuernokken 36 vorgesehen, die bei entsprechender Verschiebung des Kupplungsstückes 14 unter die Hohlradklinken greift und diese aussteuert.

Der Planetenradträger dreht sich um die Nabenachse 6 und bildet auf der einen Seite der Planetenradführung 37 das Gegenstück zur Kupplungsverzahnung 34. Auf der anderen Seite befindet sich der Sitz des Bremskonuses 17 mit dem Schraubengewinde 38 zur axialen Verschiebung des Bremskonuses 17 während der Rückwärtsbewegung des Antreibers 4.

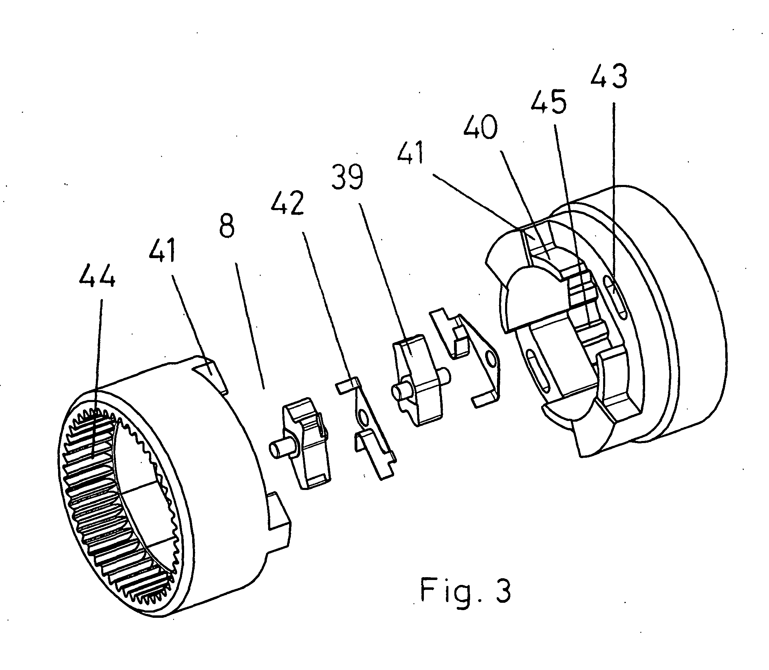

Fig. 3 zeigt eine Explosionszeichnung vom Hohlrad 8 mit den Hohlradklinken, die als bolzengelagerten Verschiebeklinken 39 ausgebildet sind. Das Hohlrad ist als Sinterformteil gestaltet und besteht aus zwei werkzeugfallenden Hälften, die ohne spanende Nachbearbeitung nach dem Einlegen der Verschiebeklinken spielfrei zusammengefügt werden. Die Hohlradhälften sind so aufeinander abgestimmt, dass sie sich mittels Radialführungen 40 und Verdrehanschlägen 41 gegenseitig abstützen. Die Hohlradhälften sind miteinander nicht axial fixiert und werden im montierten Zustand vom Planetenradträger und vom Steuerteil fixiert. Die Verschiebeklinken 39 werden von Blechfedern 42, die sich an den Hohlradhälften abstützen, vorgespannt und werden mit ihrem Bolzen in gegenüberliegenden Langlöchern 43 gelagert. Die eine Hohlradhälfte hat eine Innenverzahnung 44, die mit den Planetenrädern zusammenwirkt, während in der anderen Hohlradhälfte die Mitnahmekontur 45 für die Antriebs- bzw. Bremsklinken angeordnet sind.

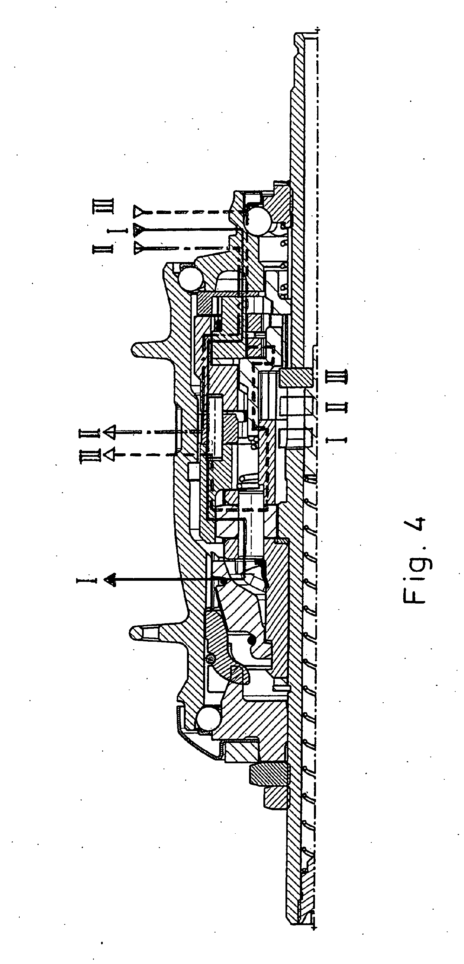

Fig. 4 zeigt den Kraftfluß in den verschiedenen Gangstufen des lastschaltbaren Nabengetriebes. Der Kraftfluß für den Berggang ist mit **I** gekennzeichnet und mit einer durchgezogenen Linie dargestellt. Das Schaltelement steht in der linken Stellung, ebenfalls mit **I** gekennzeichnet. In dieser Getriebestellung wird die Antreiberdrehzahl untersetzt, die Nabenhülse dreht folglich langsamer als der vom Ritzel angetriebene Antreiber.

Der Kraftfluß im direkten Gang ist mit **II** gekennzeichnet und wird mit einer Strich-Punkt-Linie dargestellt. Das Schaltelement steht in der mittleren Stellung, ebenfalls mit **II** gekennzeichnet. In dieser Getriebestellung wird die Antriebsdrehzahl 1:1 an die Nabenhülse weitergegeben.

Im Schnellgang wird die Antriebsdrehzahl übersetzt, die Nabenhülse dreht schneller als der Antreiber. Der Kraftfluß ist mit **III** gekennzeichnet und wird mit einer strichlierten Linie dargestellt. Das Schaltelement steht dabei in der rechten Stellung und ist ebenfalls mit **III** gekennzeichnet.

### Bezugszeichenliste

- 1: Nabenachse
- 2: Nabenhülse
- 3: Lagerschild
- 4: Antreiber
- 5: Sonnenrad
- 6: Planetenradträger
- 7: Planetenrad
- 8: Hohlrad
- 9: Schaltelement
- 10: Steuerteil
- 11: Klinkenträger
- 12: Übertragungsklinken
- 13: Schalthülse
- 14: Kupplungsstück
- 15: Anlaufkontur
- 16: Hohlradklinken
- 17: Bremskonus
- 18: Bremsmantel
- 19: Bremszylinder
- 20: Sperrklinken
- 21: Distanzbuchse
- 22: Schalthülsenfeder
- 23: Auflaufbund
- 24: Anlaufbund
- 25: Steuerkontur
- 26: Laufbahn
- 27: Mitnahmesegment
- 28: Steuerprofil
- 29: Klinkenaufnahme
- 30: Führungselement
- 31: Verdrehanschlag
- 32: Aufnahmemulde
- 33: Längsführung
- 34: Kupplungsverzahnung
- 35: Mitnahmezahn
- 36: Aussteuernocken
- 37: Planetenradführung
- 38: Schraubengewinde
- 39: Verschiebeklinken
- 40: Radialführung
- 41: Verdrehanschlag
- 42: Blechfedern
- 43: Langloch
- 44: Innenverzahnung
- 45: Mitnahmekontur

## Patentansprüche

1. Lastschaltbare Mehrgangnabe, insbesondere für Fahrräder, bestehend aus einer Nabenhülse 2, einer feststehenden Nabenachse 1, einem Schaltelement 9, einem gelagerten Antreiber 4, einem Planetenradgetriebe mit Planetenradträger 6, Planetenrädern 7 und Hohlrad 8, einem zwischen Antreiber 4 und Planetenradträger 6 angeordneten Kupplungsstück 14 sowie Klinken zur Kraftübertragung in verschiedenen Betriebs- bzw. Schaltstellungen,
**dadurch gekennzeichnet,**
**dass** zwei verschiedene Arten von bolzenlosen Klinken zur Weiterleitung des Kraftflusses vom Antreiber 4 in Klinkenaufnahmen 29 am äußeren Umfang an einem separaten Klinkenträger 11 angeordnet sind und sich dort abstützen.

2. Lastschaltbare Mehrgangnabe nach Anspruch 1,
**dadurch gekennzeichnet,**
**dass** Antreiber 4 und Klinkenträger 11 durch mindestens ein Mitnahmesegment 27, das ein Verdrehspiel zuläßt, verbunden sind.

3. Lastschaltbare Mehrgangnabe nach Anspruch 2,
**dadurch gekennzeichnet,**
**dass** der Klinkenträger 11 auf mindestens zwei Mitnahmesegmenten 27 des Antreibers 4, die axial in den Klinkenträger 11 hineinragen, gelagert ist und in beiden Drehrichtungen bewegt werden kann und dass ein Verdrehspiel zwischen Mitnahmesegmente 27 und Verdrehanschläge 31 im Klinkenträger 11 vorgesehen ist.

4. Lastschaltbare Mehrgangnabe nach Anspruch 1,
**dadurch gekennzeichnet,**
**dass** die Klinken zur Kopplung von Klinkenträger 11 und Hohlrad 8 am Umfang des Klinkenträgers 11 und die Klinken zur Kopplung von Klinkenträger 11 und Kupplungsstück 14 am Innendurchmesser des Klinkenträgers 11 angeordnet sind.

5. Lastschaltbare Mehrgangnabe nach Anspruch 4,
**dadurch gekennzeichnet,**
**dass** die Klinken am Klinkenträger 11 unter Federvorspannung stehen, verursacht durch Federelemente z. B. Schraubenfeder oder Sprengring, so dass die Klinken, wenn nicht daran gehindert, radial vom Klinkenträger 11 weg schwenken.

6. Lastschaltbare Mehrgangnabe nach den Ansprüchen 4 und 5,
**dadurch gekennzeichnet,**
**dass** die Klinken zur Kopplung von Klinkenträger 11 und Hohlrad 8 mittels eines, drehfest mit dem Antreiber 4 verbundenen Steuerteils 10 sowie einem entsprechend angeordneten Federelement, insbesondere Schraubenfeder, drehrichtungsabhängig in die Mitnahmekontur 45 des Hohlrades hinein oder heraus bewegt werden.

7. Lastschaltbare Mehrgangnabe nach Anspruch 6,
**dadurch gekennzeichnet,**
**dass** sich Steuerteil 10 und Antreiber 4 relativ zum Klinkenträger 11 verdrehen und somit die federvorgespannten Klinken drehrichtungsabhängig in einen Freiraum bzw. zum Steuernocken 28 am Steuerteil 10 radial nach außen schwenken können oder nach innen gedrückt werden, wenn das Steuerteil 10 weiter gedreht wird und die Klinken über den Steuernocken 28 nach innen bewegt werden.

8. Lastschaltbare Mehrgangnabe nach den Ansprüchen 6 und 7,
**dadurch gekennzeichnet,**
**dass** am Steuerteil 10 eine, mehrere Freiräume bzw. Steuerprofil 28 bildende Kontur zum radialen Ein- bzw. Auskoppeln der Klinken vorgesehen ist und dass diese Kontur die Klinken am Umfang teilweise axial umschließen.

9. Lastschaltbare Mehrgangnabe nach den Ansprüchen 6 bis 8,
**dadurch gekennzeichnet,**
**dass** das Steuerteil 10 als Formteil, insbesondere als Kunststoffformteil gestaltet ist und aus einem maßhaltigen und wärmebeständigen Werkstoff besteht und zwischen Antreiber 4 und Klinkenträger 11 angeordnet ist..

10. Lastschaltbare Mehrgangnabe nach den Ansprüchen 6 und 7,
**dadurch gekennzeichnet,**
**dass** mindestens eine Klinke am Umfang des Klinkenträgers 11 angeordnet sind, die vom Steuerteil 10 gesteuert beim Vorwärtsdrehen in Eingriff gelangt sowie mindestens eine Klinke, die beim Rückwärtsdrehen in Funktion tritt, insbesondere dann, wenn die Rücktrittbremse wirksam werden soll, wobei der Ein- bzw. Aussteuervorgang jeweils gleichzeitig erfolgt.

11. Lastschaltbare Mehrgangnabe nach Anspruch 10,
**dadurch gekennzeichnet,**
**dass** der Klinkenträger 11 als Formteil, insbesondere Sinterformteil oder Umformteil gestaltet ist und keine spanenden Bearbeitungen erforderlich sind.

12. Lastschaltbare Mehrgangnabe nach Anspruch 11,
**dadurch gekennzeichnet,**
**dass** die axiale Fixierung der Federelemente, vorzugsweise Schraubenfeder oder Sprengring, zum Halten und Vorspannen der Klinken durch axial und radial versetzte Führungselemente 30 am Umfang bzw. am Innendurchmesser des Klinkenträgers 11, gewährleistet wird.

13. Lastschaltbare Mehrgangnabe nach den Ansprüchen 1 bis 5,
**dadurch gekennzeichnet,**
**dass** die Klinken zur Kopplung von Klinkenträger 11 und Kupplungsstück-14 länger sind, als die Mitnahmezähne 35 am Kupplungsstück 14 und dass die angefederten Klinken mittels einer, drehfest mit der Nabenachse 1 verbundenen, axial verschiebbaren Schalthülse 13 aus den Mitnahmezähnen 35 des Kupplungsstückes 14 heraus bewegt werden können.

14. Lastschaltbare Mehrgangnabe nach den Ansprüchen 1 bis 4,
**dadurch gekennzeichnet,**
**dass** das Kupplungsstück 14 vom Antreiber 4 aus über mindestens eine Klinke am Klinkenträger 11, die in einen Mitnahmezahn 35 am Kupplungsstück 14 eingreift, angetrieben werden kann und dass das Kupplungsstück 14 in allen Schaltstellungen drehfest aber axial verschiebbar mit dem Planetenradträger 6 verbunden ist.

15. Lastschaltbare Mehrgangnabe nach Anspruch 14,
**dadurch gekennzeichnet,**
**dass** das Kupplungsstück 14 am Umfang mit einer Anlaufkontur 15 ausgestattet ist, die bei Verschiebung des Kupplungsstückes 14 in Richtung Planetenrad 7, die im Hohlrad 8 gelagerten und in die Kontur an der Nabenhülse 2 eingreifenden Hohlradklinken 16 bzw. Verschiebeklinken 39 aussteuert.

16. Lastschaltbare Mehrgangnabe nach den Ansprüchen 14 und 15,
**dadurch gekennzeichnet,**
**dass** das Kupplungsstück 14 als Formteil, insbesondere Sinterformteil oder Umformteil gestaltet ist.

17. Lastschaltbare Mehrgangnabe nach einem oder mehreren vorhergehenden Ansprüchen,
**dadurch gekennzeichnet,**
**dass** die Rücktrittbremse stets in der Berggang-übersetzung wirkt und über gleichzeitig ein- bzw. ausgesteuerte Klinken am Klinkenträger 11 aktiviert wird, wobei die Bremsklinken durch Rückwärtsdrehen des Antreibers 4 und nach Überwindung eines Verdrehspieles zwischen Antreiber 4 und Klinkenträger 11 mittels Steuerprofil 28 am Steuerteil 10, an der Mitnahmekontur 45 am Hohlrad 8 zum Ein-griff gebracht werden.

18. Lastschaltbare Mehrgangnabe nach Anspruch 17,
**dadurch gekennzeichnet,**
**dass** die bei einer Rücktrittbremsung in das Hohlrad eingeleitete Rückdrehbewegung über die Planetenräder 7 auf den Planetenradträger 6 übertragen wird und dort in eine Bremsbewegung des Bremskonuses 17 oder anderer Bremsmittel umgeformt wird und dass die an der Nabenhülse 2 angreifenden Hohlradklinken 16 bzw. Verschiebeklinken 39 und die am Kupplungsstück 14 angreifenden Übertragungsklinken 12 beim Bremsvorgang von den entsprechenden Mitnahmekonturen überholt werden oder gerade ausgesteuert sind.

## Claims

1. Multi-speed hub shiftable under load, in particular for bicycles, consisting of a hub shell 2, a stationary hub shaft 1, a selector element 9, a bearing-mounted driver 4, a planetary gear mechanism having a planet carrier 6, planet gears 7 and a ring gear 8, a coupler 14 located between the driver 4 and the planet carrier 6 and also pawls for transferring power in various operating or shift positions, **characterized in that** two different types of studless pawls are arranged in pawl receptacles 29 on the outer periphery of a separate pawl carrier 11 and are supported there to pass the power flow from the driver 4.

2. Multi-speed hub shiftable under load according to Claim 1, **characterized in that** the driver 4 and the pawl carrier 11 are connected by at least one driving segment 27 which allows rotational play.

3. Multi-speed hub shiftable under load according to Claim 2, **characterized in that** the pawl carrier 11 is mounted on at least two driving segments 27 of the driver 4 that project axially into the pawl carrier 11 and the pawl carrier can be moved in both directions of rotation, and **in that** rotational play is provided between the driving segments 27 and rotational stops 31 in the pawl carrier 11.

4. Multi-speed hub shiftable under load according to Claim 1, **characterized in that** the pawls for coupling the pawl carrier 11 and the ring gear 8 are arranged on the periphery of the pawl carrier 11 and the pawls for coupling the pawl carrier 11 and the coupler 14 are arranged on the inside diameter of the pawl carrier 11.

5. Multi-speed hub shiftable under load according to Claim 4, **characterized in that** the pawls on the pawl carrier 11 are spring-biased, caused by spring elements, for example a helical spring or a snap ring, so the pawls, if not prevented from doing so, pivot radially away from the pawl carrier 11.

6. Multi-speed hub shiftable under load according to Claims 4 and 5, **characterized in that** the pawls for coupling the pawl carrier 11 and the ring gear 8 are moved into or out of the driving contour 45 of the ring gear, depending on the direction of rotation, by means of a control part 10 connected non-rotatably to the driver 4 and also a correspondingly arranged spring element, in particular a helical spring.

7. Multi-speed hub shiftable under load according to Claim 6, **characterized in that** the control part 10 and the driver 4 rotate relative to the pawl carrier 11 and thus the spring-biased pawls can pivot radially outward, depending on the direction of rotation, into an open space or to the control cam 28 on the control part 10 or are pressed inward when the control part 10 is rotated further and the pawls are moved inward via the control cam 28.

8. Multi-speed hub shiftable under load according to Claims 6 and 7, **characterized in that** the control part 10 has a contour forming a plurality of open spaces or a control profile 28 for radially coupling or uncoupling the pawls, and **in that** this contour partially axially surrounds the pawls on the periphery.

9. Multi-speed hub shiftable under load according to Claims 6 to 8, **characterized in that** the control part 10 is a moulded part, in particular a plastics material moulded part, and is made of a dimensionally stable and heat-resistant material and is arranged between the driver 4 and the pawl carrier 11.

10. Multi-speed hub shiftable under load according to Claims 6 and 7, **characterized in that** at least one pawl is arranged on the periphery of the pawl carrier 11, which pawl, upon forward rotation, comes into engagement under the control of the control part 10 and also at least one pawl which becomes functional upon backward rotation, especially when it is intended that the backpedal brake should become operative, the engagement and disengagement operations occurring simultaneously in each case.

11. Multi-speed hub shiftable under load according to Claim 10, **characterized in that** the pawl carrier 11 is a moulded part, in particular a sintered moulded part or a remoulded part.

12. Multi-speed hub shiftable under load according to Claim 11, **characterized in that** the axial immobilization of the spring elements, preferably a helical spring or a snap ring, for holding and biasing the pawls is ensured by axially and radially offset guide elements 30 on the periphery or on the inside diameter of the pawl carrier 11.

13. Multi-speed hub shiftable under load according to Claims 1 to 5, **characterized in that** the pawls for coupling the pawl carrier 11 and the coupler 14 are longer than the driving teeth 35 on the coupler 14, and **in that** the spring-loaded pawls can be moved out of the driving teeth 35 of the coupler 14 by means of an axially displaceable shifting sleeve 13 connected non-rotatably to the hub shaft 1.

14. Multi-speed hub shiftable under load according to Claims 1 to 4, **characterized in that** the coupler 14 is driveable from the driver 4 via at least one pawl on the pawl carrier 11 that engages a driving tooth 35 on the coupler 14 and **in that** the coupler 14 is connected to the planet carrier 6 in a non-rotatable but axially displaceable manner in all shift positions.

15. Multi-speed hub shiftable under load according to Claim 14, **characterized in that** the coupler 14 has a stop contour 15 on the periphery of the coupler, the stop contour, upon displacement of the coupler 14 in the direction of the planet gear 7, disengaging the ring gear pawls 16 or displacement pawls 39 mounted in the ring gear and engaging the contour of the hub shell 2.

16. Multi-speed hub shiftable under load according to Claims 14 and 15, **characterized in that** the coupler 14 is a moulded part, in particular a sintered moulded part or remoulded part.

17. Multi-speed hub shiftable under load according to any one of the preceding claims, **characterized in that** the backpedal brake always operates in the low gear ratio and is activated via simultaneously engaged and disengaged pawls on the pawl carrier 11, the brake pawls being brought into engagement on the driving contour 45 on the ring gear 8 by backward rotation of the driver 4 and after takeup of a rotational play between the driver 4 and the pawl carrier 11 by means of a control profile 28 on the control part 10.

18. Multi-speed hub shiftable under load according to Claim 17, **characterized in that** the backward rotational motion introduced into the ring gear upon a backpedal braking operation is transferred via the planet gears 7 to the planet carrier 6 and is there converted into a braking motion of the brake cone 17 or other braking means, and **in that** during the braking operation the ring gear pawls 16 or displacement pawls 39 acting on the hub shell 2 and the transfer pawls 12 acting on the coupler 14 are either overrun or else disengaged by the corresponding driving contours.

## Revendications

1. Moyeu à plusieurs vitesses à changement de vitesse en charge, en particulier pour bicyclettes, constitué d'une douille de moyeu 2, d'un axe de moyeu fixe 1, d'un élément de changement de vitesse 9, d'un dispositif d'entraînement sur palier 4, d'un engrenage planétaire comprenant un porte-satellites 6, des roues planétaires 7 et une couronne 8, d'un élément d'accouplement 14 disposé entre le dispositif d'entraînement 4 et le porte-satellites 6, ainsi que des cliquets pour le transfert de force dans différentes positions de fonctionnement ou de commutation,
**caractérisé en ce que**
deux types différents de cliquets sans goujon sont disposés et s'appuient dans des logements de cliquets 29 sur la périphérie extérieure au niveau d'un porte-cliquets séparé 11 pour transférer le flux de forces du dispositif d'entraînement 4.

2. Moyeu à plusieurs vitesses à changement de vitesse en charge selon la revendication 1,
**caractérisé en ce que**
le dispositif d'entraînement 4 et le porte-cliquets 11 sont connectés par au moins un segment d'entraînement 27 qui permet un jeu en rotation.

3. Moyeu à plusieurs vitesses à changement de vitesse en charge selon la revendication 2,
**caractérisé en ce que**
le porte-cliquets 11 est monté sur au moins deux segments d'entraînement 27 du dispositif d'entraînement 4 qui pénètrent axialement dans le porte-cliquets 11 et peut être déplacé dans deux sens de rotation, et **en ce qu'**un jeu en rotation est prévu entre les segments d'entraînement 27 et des butées de rotation 31 dans le porte-cliquets 11.

4. Moyeu à plusieurs vitesses à changement de vitesse en charge selon la revendication 1,
**caractérisé en ce que**
les cliquets pour l'accouplement du porte-cliquets 11 et de la couronne 8 sont disposés sur la périphérie du porte-cliquets 11 et les cliquets pour l'accouplement du porte-cliquets 11 et de l'élément d'accouplement 14 sont disposés sur le diamètre intérieur du porte-cliquets 11.

5. Moyeu à plusieurs vitesses à changement de vitesse en charge selon la revendication 4,
**caractérisé en ce que**
les cliquets sur le porte-cliquets 11 sont soumis à une précontrainte par ressort provoquée par des éléments de ressort, par exemple des ressorts à boudin ou des joncs, de sorte que les cliquets, lorsqu'ils n'en sont pas empêchés, pivotent radialement à l'écart du porte-cliquets 11.

6. Moyeu à plusieurs vitesses à changement de vitesse en charge selon les revendications 4 et 5,
**caractérisé en ce que**
les cliquets pour l'accouplement du porte-cliquets 11 et de la couronne 8 sont déplacés vers l'intérieur ou vers l'extérieur en fonction du sens de rotation dans le contour d'entraînement 45 de la couronne, au moyen d'une pièce de commande 10 connectée de manière solidaire en rotation au dispositif d'entraînement 4 et d'un élément de ressort disposé en conséquence, notamment un ressort à boudin.

7. Moyeu à plusieurs vitesses à changement de vitesse en charge selon la revendication 6,
**caractérisé en ce que**
la pièce de commande 10 et le dispositif d'entraînement 4 tournent par rapport au porte-cliquets 11 et de ce fait les cliquets précontraints par ressort peuvent pivoter radialement vers l'extérieur ou être poussés vers l'intérieur en fonction du sens de rotation, dans un espace libre ou vers la came de commande 28 sur la pièce de commande 10, lorsque la pièce de commande 10 est tournée davantage, et que les cliquets sont déplacés vers l'intérieur par le biais des cames de commande 28.

8. Moyeu à plusieurs vitesses à changement de vitesse en charge selon les revendications 6 et 7,
**caractérisé en ce que**
l'on prévoit sur la pièce de commande 10 un contour formant plusieurs espaces libres ou un profil de commande 28, pour l'embrayage ou le débrayage radiaux des cliquets et **en ce que** ce contour entoure partiellement axialement la périphérie des cliquets.

9. Moyeu à plusieurs vitesses à changement de vitesse en charge selon les revendications 6 à 8,
**caractérisé en ce que**
la pièce de commande 10 est réalisée sous forme de pièce moulée, notamment de pièce moulée en plastique, se compose d'un matériau de dimensions prescrites et résistant à la température, et est disposée entre le dispositif d'entraînement 4 et le porte-cliquets 11.

10. Moyeu à plusieurs vitesses à changement de vitesse en charge selon les revendications 6 et 7,
**caractérisé en ce que**
l'on prévoit sur la périphérie du porte-cliquets 11, au moins un cliquet qui parvient en prise lors de sa rotation vers l'avant sous l'effet de la commande de la pièce de commande 10, et au moins un cliquet qui entre en action lors de sa rotation vers l'arrière, notamment lorsque le frein de marche arrière doit être actionné, l'opération d'engagement ou de désengagement s'effectuant dans chaque cas simultanément.

11. Moyeu à plusieurs vitesses à changement de vitesse en charge selon la revendication 10,
**caractérisé en ce que**
le porte-cliquets 11 est réalisé sous forme de pièce moulée, en particulier de pièce moulée frittée ou de pièce façonnée, et aucun usinage par enlèvement de copeaux n'est nécessaire.

12. Moyeu à plusieurs vitesses à changement de vitesse en charge selon la revendication 11,
**caractérisé en ce que**
la fixation axiale des éléments de ressort, de préférence le ressort à boudin ou le jonc, pour retenir et précontraindre les cliquets, est assurée par des éléments de guidage décalés axialement et radialement 30 sur la périphérie ou sur le diamètre intérieur du porte-cliquets 11.

13. Moyeu à plusieurs vitesses à changement de vitesse en charge selon les revendications 1 à 5,
**caractérisé en ce que**
les cliquets pour l'accouplement du porte-cliquets 11 et de l'élément d'accouplement 14 sont plus longs que les dents d'entraînement 35 sur l'élément d'accouplement 14 et **en ce que** les cliquets précontraints peuvent être ressortis des dents d'entraînement 35 de l'élément d'accouplement 14 au moyen d'une douille de commutation 13 déplaçable axialement connectée de manière solidaire en rotation à l'axe du moyeu 1.

14. Moyeu à plusieurs vitesses à changement de vitesse en charge selon les revendications 1 à 4,
**caractérisé en ce que**
l'élément d'accouplement 14 peut être entraîné, depuis le dispositif d'entraînement 4, par le biais d'au moins un cliquet sur le porte-cliquets 11, qui vient en prise dans une dent d'entraînement 35 sur l'élément d'accouplement 14 et **en ce que** l'élément d'accouplement 14 est connecté au porte-satellites 6 de manière solidaire en rotation dans toutes les positions de commutation mais de manière déplaçable en translation axiale.

15. Moyeu à plusieurs vitesses à changement de vitesse en charge selon la revendication 14,
**caractérisé en ce que**
l'élément d'accouplement 14 est muni sur sa périphérie d'un contour d'attaque 15 qui, lors du déplacement de l'élément d'accouplement 14 dans la direction de la roue planétaire 7, désengage les cliquets de couronne 16 ou les cliquets de translation 39 montés dans la couronne 8 et venant en prise dans le contour sur la douille de moyeu 2.

16. Moyeu à plusieurs vitesses à changement de vitesse en charge selon les revendications 14 et 15,
**caractérisé en ce que**
l'élément d'accouplement 14 est réalisé sous forme de pièce moulée, notamment de pièce moulée frittée ou de pièce façonnée.

17. Moyeu à plusieurs vitesses à changement de vitesse en charge selon l'une quelconque ou plusieurs des revendications précédentes,
**caractérisé en ce que**
le frein de marche arrière agit toujours dans la démultiplication pour un rapport de vitesse en côte et est activé par le biais de cliquets simultanément engagés et désengagés sur le porte-cliquets 11, les cliquets de frein étant amenés en prise, par une rotation vers l'arrière du dispositif d'entraînement 4 et après avoir surmonté un jeu rotation entre le dispositif d'entraînement 4 et le porte-cliquets 11, au moyen d'un profil de commande 28 sur la pièce de commande 10, avec le contour d'entraînement 45 sur la couronne 8.

18. Moyeu à plusieurs vitesses à changement de vitesse en charge selon la revendication 17,
**caractérisé en ce que**
le mouvement de rotation vers l'arrière amorcé dans la couronne lors d'un freinage de marche arrière est transmis par le biais des roues planétaires 7 au porte-satellites 6 et de là est converti en un mouvement de freinage du cône de freinage 17 ou d'autres moyens de freinage et **en ce que** les cliquets de couronne 16 ou les cliquets de translation 39 venant en prise sur la douille de moyeu 2, et les cliquets de transfert 12 venant en prise sur l'élément d'accouplement 14, sont dépassés lors de l'opération de freinage par les contours d'entraînement correspondants, ou sont même complètement désengagés.
